# EUROPÄISCHE PATENTSCHRIFT

(11) **EP 2 614 227 B1**
(45) Veröffentlichungstag und Bekanntmachung des Hinweises auf die Patenterteilung: **01.06.2016**
(21) Anmeldenummer: 11776083.5
(22) Anmeldetag: 09.09.2011
(51) Int. Cl.: F01L 1/047, B21D 53/84, B23P 11/02, F16H 53/02, F02F 7/00

(54) **VERFAHREN ZUM ZUSAMMENBAU EINES MOTORMODULS**
METHOD OF ASSEMBLING AN ENGINE MODULE
PROCÉDÉ POUR ASSEMBLER UN MODULE DE MOTEUR

(30) Priorität: 10.09.2010 DE 102010045047
(43) Veröffentlichungstag der Anmeldung: 17.07.2013
(73) Patentinhaber: Thyssenkrupp Presta Teccenter Ag, 9492 Eschen (LI)
(72) Erfinder: WALTER, Michael, 38871 Ilsenburg (DE); SCHULZE, Marian, 38855 Wernigerode (DE); SITTE, Sven, 38855 Wernigerode (DE)
(74) Vertreter: Adams, Steffen
(86) Internationale Anmeldenummer: PCT/EP2011/004548
(87) Internationale Veröffentlichungsnummer: WO 2012/031770

(56) Entgegenhaltungen:
- EP-A1- 1 936 131
- EP-B1- 1 155 770
- DE-U1-202006 018 359
- GB-A- 2 290 599
- GB-A- 2 456 792
- US-A- 3 672 338
- US-A1- 2008 250 895
- US-A1- 2010 059 002

## Beschreibung

Die Erfindung betrifft ein Verfahren zum Zusammenbau eines Motormoduls für einen Kfz-Motor, das eine Zylinderkopfhaube und eine in der Zylinderkopfhaube drehbar gelagerte Nockenwelle umfasst.

Um den Montageaufwand beim Zusammenbau eines Kfz-Motors zu verringern und die Lagerhaltungs- und Logistikkosten bei der Motormontage zu reduzieren, werden den Automobilherstellern von den Zulieferern bereits fertig zusammengebaute Motormodule unmittelbar an das Montageband geliefert. Solche Motormodule bestehen z.B. aus einer Zylinderkopfhaube und einer darin gelagerten Nockenwelle. Im Rahmen des Motorzusammenbaus muss dann lediglich dieses Modul an dem Zylinderkopf des Motors befestigt werden.

In der EP 1 155 770 B1 wird ein Montageverfahren für ein Motormodul, bestehend aus einer Zylinderkopfhaube und einer darin gelagerten Nockenwelle, beschrieben. Bei diesem bekannten Montageverfahren ist eine Zylinderkopfhaube mit Durchführungen vorgesehen, durch welche die zylindrische Tragwelle der späteren Nockenwelle hindurch gesteckt wird. Die auf der Nockenwelle zu befestigenden Bauteile wie z.B. die Nocken müssen in speziellen Aufnahmen derart angeordnet werden, dass sie genau in der erforderlichen Winkelausrichtung und an der erforderlichen Axialposition positioniert sind. Sind die Zylinderkopfhaube und die auf der Tragwelle zu befestigenden Bauteile mit ihren Durchführungen zur Aufnahme der Tragwelle zueinander lage- und winkelrichtig ausgerichtet, so wird die Tragwelle durch die Durchführungen hindurch geschoben. Nach einer Ausführungsform des in der EP 1 155 770 B1 beschriebenen Verfahrens werden die auf der Tragwelle zu befestigenden Bauteile vor dem Durchschieben der Tragwelle erwärmt und die Tragwelle abgekühlt, um ein kraftfreies Einschieben der Tragwelle zu gewährleisten. Die Nocken werden mittels Pressverbindung auf der Tragwelle befestigt. Um diese Pressverbindung herzustellen werden in der EP 1 155 770 B1 verschiedene Möglichkeiten angegeben. Zum einen kann die Pressverbindung dadurch hergestellt werden, dass die Tragwelle mittels einer Presse unter Kraftaufwand eingeschoben wird. Eine andere Möglichkeit, die Pressverbindung herzustellen besteht darin, dass die eingeschobene Tragwelle einer Innenhochdruckumformung unterzogen wird, so dass nacheinander oder gleichzeitig der Außendurchmesser Welle wenigstens im Bereich der Bauteile ausgeweitet wird.

Das aus der EP 1 155 770 B1 bekannte Verfahren ist aufwändig und mit hohen Kosten verbunden, weil die auf der Tragwelle zu befestigenden Bauteile bereits vor dem Einschieben der Tragwelle genau so positioniert und ausgerichtet werden müssen, wie sie auf der späteren Nockenwelle angeordnet sein sollen. Um dies zu erreichen sind speziell ausgebildete und geformte Halteelemente erforderlich, in welche die Bauteile lage- und winkelgerecht eingelegt werden können. Für jedes Bauteil muss das Halteelement dabei eine speziell geformte Halteaufnahme besitzen. Die Herstellung dieser Halteelemente ist aufwändig und teuer. Außerdem sind für unterschiedliche Nockenwellen unterschiedliche Halteelemente erforderlich. Denn die Winkelausrichtung der Nocken relativ zum Tragrohr der Nockenwelle ist z.B. abhängig davon, ob es sich um eine Nockenwelle für einen 4-Zylinder oder einen 6-Zylinder-Motor handelt.

Der Erfindung liegt die Aufgabe zu Grunde, ein Verfahren zum Zusammenbau eines aus einer Zylinderkopfhaube und einer Nockenwelle bestehenden Motormoduls anzugeben, bei dem keine speziell ausgebildeten Vorrichtungen zum Halten und Anordnen der auf der Tragwelle zu befestigenden Bauteile in der jeweils korrekten Winkelposition erforderlich sind, und das flexibel einsetzbar ist für unterschiedliche Nockenwellen, die Nocken mit unterschiedlichen Winkelpositionen aufweisen.

Diese Aufgabe wird gelöst durch ein Verfahren mit den Merkmalen nach Anspruch 1. Vorteilhafte Weiterbildungen des erfindungsgemäßen Verfahrens sind in den Unteransprüchen angegeben.

Ein großer Vorteil des erfindungsgemäßen Verfahrens besteht darin, dass die auf der Tragwelle zu befestigenden Bauteile wie beispielsweise Nocken, Sensorräder usw. vor dem Einschieben der Tragwelle lediglich an solchen Axialpositionen positioniert werden, welche nicht den Axialpositionen entsprechen, die diese Bauteile auf der fertig gebauten Nockenwelle einnehmen. Daher brauchen die Bauteile hinsichtlich ihrer Winkellage relativ zur Tragwelle noch nicht genau ausgerichtet zu sein. Bei dem erfindungsgemäßen Verfahren kann auf eine genaue Ausrichtung der Bauteile vor dem Einschieben der Tragwelle vollständig verzichtet werden. Deshalb sind keine besonderen Haltevorrichtungen erforderlich, durch die bereits vor dem Einschieben der Tragwelle die genaue Winkelposition der einzelnen auf der Tragwelle zu befestigenden Bauteile relativ zu der Tragwelle festgelegt wird.

Bei dem erfindungsgemäßen Verfahren werden die Bauteile nach dem Einschieben der Tragwelle dadurch auf dieser befestigt, dass entweder die Bauteile auf die ihnen zugeordneten Durchmesseraufweitungen der Tragwelle aufgepresst oder die den Bauteilen zugeordneten Durchmesseraufweitungen in die Durchführungsöffnungen der Bauteile eingepresst werden. Dabei kann die jeweilige Winkellage jedes einzelnen Bauteils relativ zur Tragwelle auf einfache Weise dadurch eingestellt werden, dass die Tragwelle relativ zu dem jeweiligen Bauteil um einen bestimmten Winkel verdreht wird, so dass die erforderliche relative Winkellage des Bauteils zu der Tragwelle erreicht wird. Daher können mit dem erfindungsgemäßen Verfahren unterschiedliche Module mit ganz unterschiedlichen Nockenwellen gebaut werden, ohne dass für jede unterschiedliche Nockenwelle jeweils eine spezielle Haltevorrichtung erforderlich ist, um die korrekte Positionierung und Ausrichtung der Nocken auf der Tragwelle sicherzustellen. Somit lassen sich mit dem erfindungsgemäßen Verfahren auf kostengünstige und einfache Weise für unterschiedliche Motoren oder Motorvarianten Module mit unterschiedlichen Nockenwellen fertigen, bei denen die auf der Nockenwelle zu befestigenden Bauteile in unterschiedlichen Winkellagen relativ zu der Tragwelle angeordnet sind.

Nach einer Ausführungsform der Erfindung werden die Durchmesserausweitungen durch ein mechanisches Umformverfahren wie zum Beispiel das Rollieren in die Tragwelle eingebracht.

Die Lageraufnahmen der Zylinderkopfhaube und die Lagerabschnitte der Tragwelle werden erfindungsgemäß so bemessen, dass die Lageraufnahmen im fertig montierten Zustand der Zylinderkopfhaube zusammen mit den Lagerabschnitten Gleitlager bilden. Die Lagerabschnitte der Tragwelle können dazu derart auf Maß geschliffen werden, dass die Tragwelle im erkalteten Zustand den für die Ausbildung eines Gleitlagers erforderlichen, geringfügig kleineren Durchmesser aufweist als die Lageraufnahme der Zylinderkopfhaube.

Im Folgenden wird die Erfindung anhand von schematischen, das Prinzip der Erfindung darstellenden Zeichnungen näher erläutert. Im Einzelnen zeigen
Fig. 1 eine für das erfindungsgemäßen Verfahren vorbereitete Tragwelle;
Fig. 2 ein Bauteil in Form einer Nocke, die beim Zusammenbau des Moduls auf der Tragwelle zu befestigen ist;
Fig. 3 eine schematische Darstellung des Verfahrensschritts, bei dem die abgekühlte Tragwelle durch die Lageraufnahmen der Zylinderkopfhaube und die erwärmten Bauteile, die auf der Tragwelle zu befestigen sind, hindurch geschoben wird;
Fig. 4 eine schematische Darstellung der das Modul bildenden Bauteile mit abgekühlter Tragwelle und erwärmten Bauteilen, wobei die Tragwelle ihre Position erreicht hat;
Fig. 5 die schematische Darstellung nach Fig. 4 nach dem erfolgten Temperaturausgleich, das heißt mit auf Umgebungstemperatur erwärmter Tragwelle und mit auf Umgebungstemperatur abgekühlten Bauteilen;
Fig. 6 eine schematische Darstellung des Fügeprozesses, mit dem ein erstes Bauteil auf der Tragwelle befestigt wird;
Fig. 7 eine schematische Darstellung des Fügeprozesses, mit dem ein zweites Bauteil auf der Tragwelle befestigt wird;
Fig. 8 eine schematische Darstellung des fertig gefügten Moduls;
Fig. 9 eine schematische Darstellung einer hohlen Tragwelle für eine verstellbare Nockenwelle mit zwei unterschiedlichen Bauteilen 5 und 5', von denen nur das Bauteil 5 mit der Tragwelle drehfest verbunden wird;
Fig. 10a -10d die Verfahrensschrittabfolge bei der Herstellung einer verstellbaren Nockenwelle mit zwei unterschiedlichen Bauteilen 5 und 5' gemäß Fig. 9;
Fig. 11 eine zusammengebaute verstellbare Nockenwelle mit hohler Tragwelle und darin konzentrisch angeordneter, relativ zur Tragwelle verdrehbarer Innenwelle.

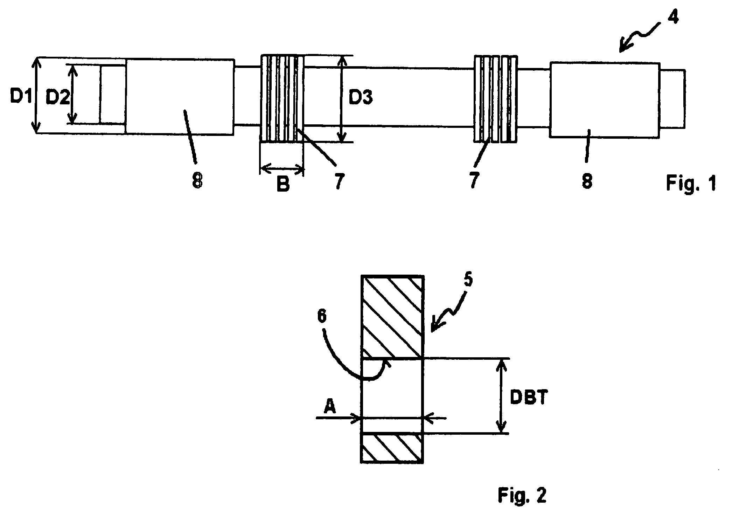

In Fig. 1 ist eine für die Verwendung in dem erfindungsgemäßen Verfahren vorbereitete Tragwelle 4 dargestellt. Die Tragwelle 4 weist mehrere Abschnitte mit unterschiedlichen Durchmessern auf. Die mit D1 bezeichneten Durchmesser bilden die Lagerabschnitte 8 der Tragwelle 4, welche im fertig zusammengebauten Zustand des Moduls mit den Lageraufnahmen 2 der Zylinderkopfhaube 1 Gleitlagerungen für die Nockenwelle 3 bilden. Mit D2 ist der Durchmesser bezeichnet, auf dem die auf der Tragwelle zu befestigenden Bauteile 5 vor dem Herstellen einer festen Verbindung mit der Tragwelle 4 vorpositioniert werden. Mit D3 ist der Außendurchmesser der Durchmesseraufweitungen 7 bezeichnet. Im dargestellten Ausführungsbeispiel sind zwei unterschiedliche Möglichkeiten zur Ausbildung der Durchmesseraufweitungen 7 angegeben. Die in Fig. 1 links dargestellte Durchmesseraufweitung 7 ist durch eine Rollierung hergestellt worden. Ihre Breite B ist auf das auf der Durchmesseraufweitung 7 zu befestige Bauteil abgestimmt.

Die in Fig. 1 rechts dargestellte Durchmesseraufweitung 7 ist dagegen durch einen Schleifprozess hergestellt worden, d.h. die Tragwelle 4 wurde ausgehend von einem größeren Durchmesser auf den Durchmesser D3 abgeschliffen. In den nachfolgend dargestellten Ausführungsbeispielen der Erfindung werden allerdings nur noch durch Rollierungen hergestellte Durchmesseraufweitungen dargestellt.

Fig. 2 zeigt ein Bauteil 5 bei Umgebungstemperatur, das auf der Tragwelle 4 im Zuge des Zusammenbaus des Moduls befestigt werden soll. Das in Fig. 2 beispielhaft dargestellte Bauteil ist ein Nocken, der eine Durchgangsöffnung 6 mit einem Durchmesser DBT und einer Breite A aufweist. Mit dem erfindungsgemäßen Verfahren lassen sich jedoch nicht nur Nocken, sondern auch andere Bauteile wie z.B. Sensorräder u.ä. lagegerecht auf der Tragwelle 4 befestigen. Im Rahmen der vorliegenden Beschreibung eines konkreten Ausführungsbeispiels der Erfindung wird der Einfachheit halber lediglich das Beispiel von Nocken als auf der Tragwelle zu befestigenden Bauteilen betrachtet.

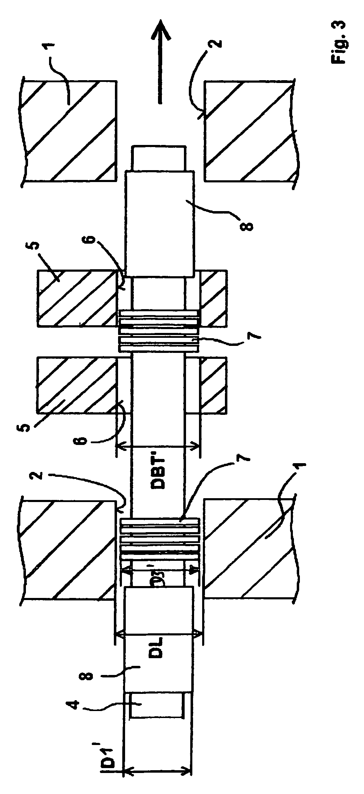

In Fig. 3 ist der Verfahrensschritt des Durchschiebens der abgekühlten Tragwelle 4 durch die Lageraufnahmen 2 der Zylinderkopfhaube 1 und die Durchgangsöffnungen 6 der erwärmten Bauteile 5 dargestellt. Die Darstellung ist rein schematisch gehalten, und um das Verständnis zu erleichtern, sind von der Zylinderkopfhaube 1 keine weiteren Teile oder Details dargestellt. Der aufgrund der Abkühlung der Tragwelle 4 verringerte Außendurchmesser der Lagerabschnitte 8 ist mit D1' und der verringerte Durchmesser der Durchmesseraufweitungen 7 ist mit D3' bezeichnet. Der aufgrund der Erwärmung der Bauteile 5 vergrößerte Durchmesser der Bauteil-Durchgangsöffnungen 6 ist mit DBT' bezeichnet. Des Weiteren ist mit DL der Durchmesser der Lageraufnahmen 2 der Zylinderkopfhaube 1 bezeichnet.

Die Durchmesser D1 der Lagerabschnitte 8 und D3 der Durchmesseraufweitungen 7 sowie der Durchmesser DBT der Durchgangsöffnungen 6 der Bauteile 5 wurden im Rahmen der Herstellung der jeweiligen Bauteile so bemessen, dass die Durchmesser D1' und D3' der abgekühlten Tragwelle 4 geringfügig kleiner sind als der Durchmesser DL der Lageraufnahmen 2 und die Durchmesser DBT' der erwärmten Bauteile 5. Auf diese Weise kann die Tragwelle 4 einfach durch die Lageraufnahmen 2 und die Durchgangsöffnungen 6 hindurch geschoben werden.

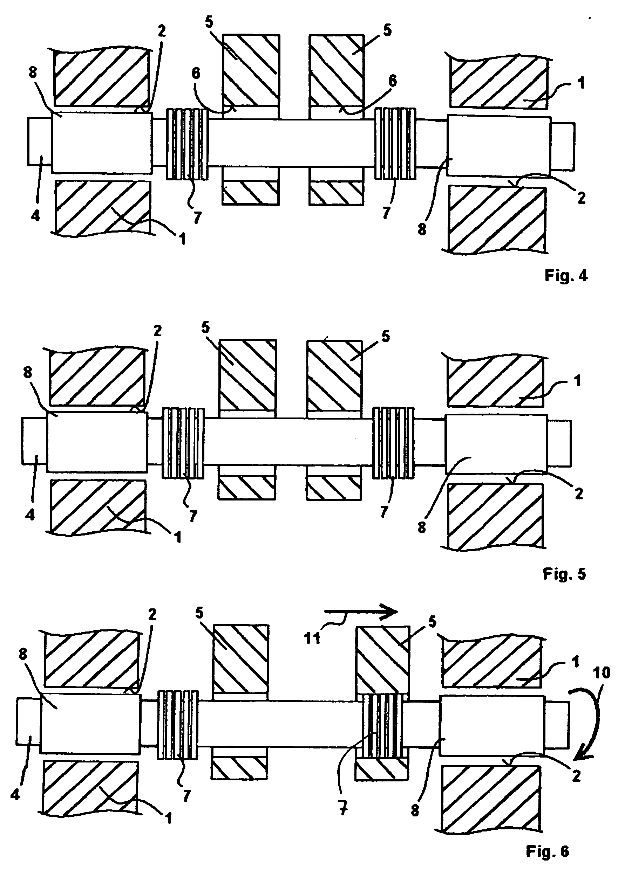

Die Bauteile 5 werden relativ zur Zylinderkopfhaube 1 positioniert, ohne dass auf die Winkelausrichtung der Bauteile zur Tragwelle 4 geachtet werden muss. Die Durchgangsöffnungen 6 werden dabei so ausgerichtet, dass sie mit den Lageraufnahmen 2 der Zylinderkopfhaube 1 fluchten. Die Erwärmung der Bauteile 5 kann vor oder nach dem Positionieren erfolgen. Ein geeignetes Aufwärmverfahren ist das Erwärmen mittels Induktion. Die Tragwelle 4 kann beispielsweise mit flüssigem Stickstoff oder einem anderen Kühlmittel abgekühlt werden
Fig. 4 zeigt den fertig eingeschobenen Zustand der Tragewelle 4 bei immer noch abgekühlter Tragwelle 4 und immer noch erwärmten Bauteilen 5. Ausgehend von diesem Zustand werden nun die Tragwelle 4 erwärmt und die Bauteile 5 abgekühlt, bis beiden Bauteile Umgebungstemperatur angenommen haben. Dieser Zustand nach erfolgtem Temperaturausgleich ist in Fig. 5 dargestellt. Die Bauteile 5 sind in diesem Zustand auf einem Abschnitt mit dem Durchmesser D2 vorpositioniert. Der Durchmesser DBT der Durchgangsöffnungen 6 ist etwas größer als der Durchmesser D2, so dass die relative Winkellage der Bauteile 5 zu der Tragwelle 4 durch einfaches Verdrehen der Tragwelle 4 frei variiert und in jeder gewünschten Weise eingestellt werden kann.

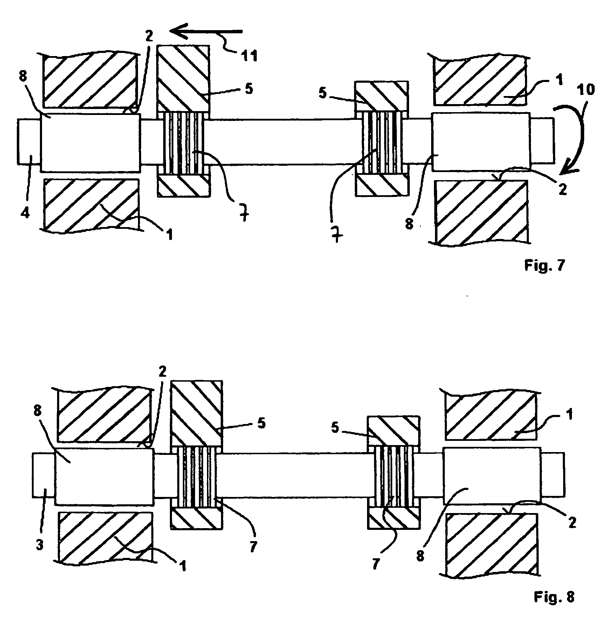

Fig. 6 zeigt schematisch, wie ein erstes Bauteil 5 durch Aufpressen auf die Durchmesseraufweitung 7 auf der Tragwelle 4 befestigt wird. Bevor das Bauteil 5 auf die Durchmesseraufweitung 7 aufgepresst wird, wird durch Verdrehen der Tragwelle 4 die gewünschte Winkellage des Bauteils 5 relativ zur Tragwelle 4 eingestellt. Dies wird in Fig. 6 durch den Pfeil 10 angedeutet. Der Pfeil 11 gibt die Aufpressrichtung für das Bauteil 5 an. In analoger Weise ist der Befestigungsvorgang für das zweite Bauteil 5 in Fig. 7 dargestellt. Auch hier wird wieder auf sehr einfache Weise die gewünschte Winkellage des Bauteils 5 relativ zur Tragwelle 4 durch einfaches Verdrehen der Tragwelle 4 eingestellt.

Es versteht sich, dass auf dieselbe Weise weitere Bauteile auf der Tragwelle 4 befestigt werden können. Daher ist es mit dem erfindungsgemäßen Verfahren auf einfache und kostengünstige Weise möglich, mit ein und derselben Vorrichtung und ein und derselben Verfahrensweise unterschiedliche Module aus Zylinderkopfhaube und Nockenwelle zu fertigen, also z.B. ein Modul mit einer Nockenwelle für einen 4-Zylinder-Motor und eines mit einer Nockenwelle für einen 6- oder 8-Zylinder-Motor. Das erfindungsgemäße Verfahren erhöht somit auch die Fertigungsflexibilität, weil nacheinander unterschiedliche Module ohne aufwändige Umrüstungen der Montagevorrichtung zusammengebaut werden können.

Fig. 8 zeigt schließlich schematisch das fertig zusammengebaute Modul. Die Bauteile 5 sind kraftschlüssig und formschlüssig mit der Tragwelle 4 verbunden. Die Lagerabschnitte 8 bilden mit den Lageraufnahmen 2 der Zylinderkopfhaube 1 Gleitlagerungen aus.

Nach einer Ausführungsform des erfindungsgemäßen Verfahrens werden die mit der Tragwelle 4 zu verbindenden Bauteile 5 bei der Ausführung des Verfahrensschritts, in welchem die in einer vorbestimmten Reihenfolge relativ zu der Tragwelle 4 so positioniert werden, dass ihre Durchgangsöffnungen 6 fluchtend zu den Lageraufnahmen 2 der Zylinderkopfhaube 1 angeordnet und an Axialpositionen positioniert sind, welche nicht den Axialpositionen entsprechen, die diese Bauteile 5 auf der fertig gebauten Nockenwelle 3 einnehmen, zusätzlich auch noch so positioniert, dass sie nach dem durch Erwärmen der Tragwelle 4 und/oder Abkühlen der Bauteile 5 erreichten Temperaturausgleich zwischen Tragwelle 4 und Bauteilen 5 auf einem Teilabschnitt der ihnen jeweils zugeordneten Durchmesseraufweitungen 7 lösbar fixiert gehalten sind. Auf diese Weise ist es möglich, die Bauteile 5 in einer bestimmten gewünschten Relativposition zur Tragwelle 4 lösbar auf dieser zu fixieren. Wenn die Bauteile 5 z.B. durch Nocken gebildet sind, können alle Nocken 5 derart lösbar auf der Tragwelle 4 fixiert werden, dass ihre Nockenerhebungen in die gleiche Richtung weisen. Der Vorteil dieser Vorgehensweise besteht darin, dass die nach dem Positionieren der Nocken auszuführende Pressverbindung zwischen Nocken 5 und Tragwelle 4 auf einfache Weise in einem automatisierten Verfahrensschritt erfolgen kann. Im Rahmen einer automatisierten Herstellung der Pressverbindung zwischen den Bauteilen/Nocken 5 und der Tragwelle 4 mit Hilfe einer Aufpressvorrichtung oder Einpressvorrichtung ist es vorteilhaft, wenn die Relativposition der Bauteile/Nocken 5 fest vorgegeben ist. Die Vorrichtung benötigt dann keine Mittel, um für jedes Bauteil/Nocken 5 dessen tatsächlich vorhandene Relativposition in Umfangsrichtung zu ermitteln, bevor durch Verdrehen der Tragwelle relativ zum Bauteil/zur Nocke 5 die erforderliche Winkellage des Bauteils/der Nocke 5 auf der Tragwelle 4 eingestellt wird.

Anders ausgedrückt: Wenn die relative Winkellage der Bauteile/Nocken 5 zur Tragwelle 4 nach deren Positionierung und vor der Herstellung der Pressverbindung nicht durch eine temporäre Fixierung der Bauteile/Nocken 5 auf der Tragwelle 4 vorbekannt ist, dann muss vor dem Herstellen der Pressverbindung zuerst die relative Winkellage der Bauteile/Nocken 5 ermittelt werden, bevor bestimmt werden kann, um welchen Winkel die Tragwelle 4 verdreht werden muss, um eine gewünschte Winkellage des Bauteils/Nockens 5 auf der Tragwelle 4 sicherzustellen. Dies erschwert die Automatisierung des Aufpressens der Bauteile/Nocken 5 auf die Tragwelle 4 bzw. des Einpressens der Tragwelle 4 in die Bauteile/Nocken 5. Wenn dagegen die Bauteile/Nocken 5 nach dem Positionieren immer in der gleichen Winkellage lösbar auf der Tragwelle 4 fixiert sind, dann kann der Arbeitsschritt der Ermittlung der relativen Winkellage der Bauteile/Nocken 5 relativ zur Tragwelle 4 entfallen, denn die relative Winkellage ist vorbekannt. Die Vorrichtung zu Herstellung der Pressverbindung zwischen den Bauteilen/Nocken 5 und der Tragwelle 4 kann daher wesentlich einfacher ausgestaltet sein und das erfindungsgemäße Verfahren zum Zusammenbau der Nockenwelle kann schneller ablaufen. Die Taktzeit wird deutlich erhöht und ein wirtschaftlicherer Betrieb der Fertigungsantage erreicht.

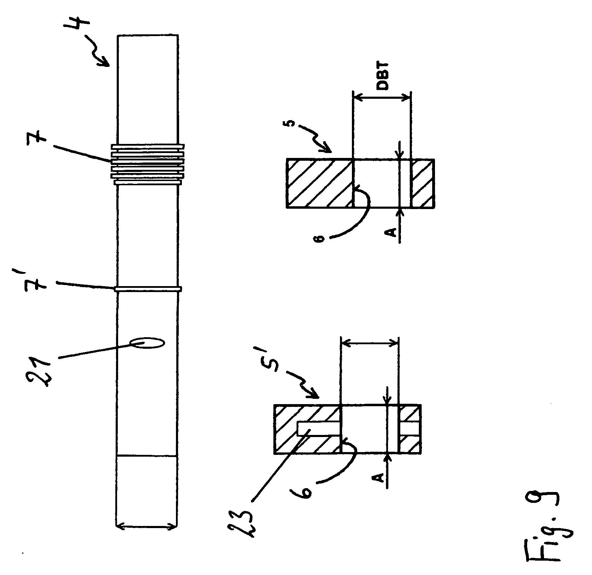

Die Fig. 9 bis 11 zeigen eine Ausführungsform, bei der das erfindungsgemäße Verfahren in Rahmen des Zusammenbaus einer verstellbaren Nockenwelle angewendet wird. Bei dieser Ausführungsform ist die Tragwelle 4 als Hohlwelle ausgebildet. In dem Inneren der Tragwelle 4 wird eine Innenwelle 20 konzentrisch zur Tragwelle 4 angeordnet, wobei die Innenwelle 20 relativ zu der Tragwelle 4 verdrehbar ist. Es sind Bauteile 5 vorgesehen, welche in der vorstehend beschriebenen Weise durch eine Pressverbindung mit der Tragwelle 4 verbunden werden. Zusätzlich zu den Bauteilen 5 ist mindestens ein weiteres Bauteil 5' vorgesehen, welches nicht mit der Tragwelle 4 verbunden wird, sondern welches verdrehfest mit der Innenwelle 20 verbunden wird. Die verdrehfeste Verbindung des Bauteils 5' mit der Innenwelle 20 erfolgt z.B. über eine Stiftverbindung, wie weiter unten noch näher erläutert wird. Auf diese Weise sind die Bauteile 5' gemeinsam mit der Innenwelle 20 relativ zu der Tragwelle 4 und den mit der Tragwelle 4 fest verbundenen Bauteilen 5 verdrehbar.

Die Bauteile 5 und 5' werden bevorzugt durch Nocken gebildet, über welche die Gaswechselventile einer Brennkraftmaschine betätigt werden. Durch eine relative Verdrehung der Innenwelle 20 zur Tragwelle 4 wird erreicht, dass die Öffnungs- und Schließzeitpunkte der von den Nocken 5' betätigten Ventile verändert werden. Auf diese Weise wird eine verstellbare Nockenwelle zur Verfügung gestellt, die unter Ausnutzung des erfindungsgemäßen Verfahrens hergestellt worden ist.

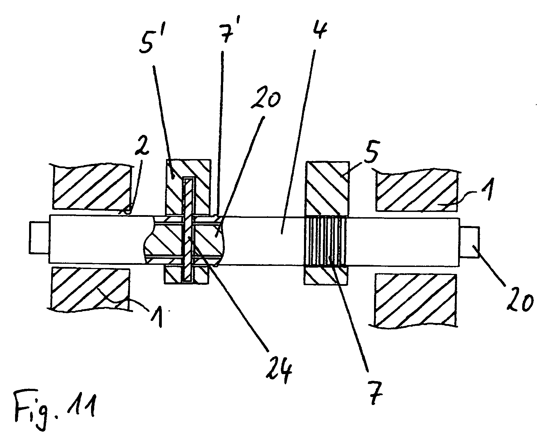

Die in Fig. 9 dargestellte Tragwelle 4 ist als Hohlwelle ausgebildet. In dem Inneren der Tragewelle 4 ist eine Innenwelle 20 konzentrisch zu dieser angeordnet (vgl. Fig. 11). Die Innenwelle 20 ist relativ zur Tragwelle 4 verdrehbar. Die in Fig. 9 dargestellte Tragwelle 4 weist zwei unterschiedliche Durchmesseraufweitungen 7, 7' auf. Die erste Durchmesseraufweitung 7 dient dazu, eine Pressverbindung mit dem Bauteil 5 in der voranstehend beschriebenen Weise auszubilden. Die zweite Durchmesseraufweitung 7' dient zur lösbaren Fixierung des Bauteils 5' auf der Tragwelle 4, wie weiter uinten noch näher beschrieben wird. Ferner weist die Tragwelle 4 eine Öffnung 21 auf. Das Bauteil 5', das im dargestellten Ausführungsbeisliel als Nocken ausgebildet ist, weist eine Bohrung 23 auf. Die in der hohlen Tragwelle 4 anzuordnende Innenwelle 20 (vgl. Fig. 11) ist in Fig. 9 nicht dargestellt. Die Öffnung 21 und die Bohrung 23 dienen zur verdrehfesten Befestigung des Bauteils 5' mit der Innenwelle 20. Dies wird weiter unten anhand von Fig. 11 erläutert.

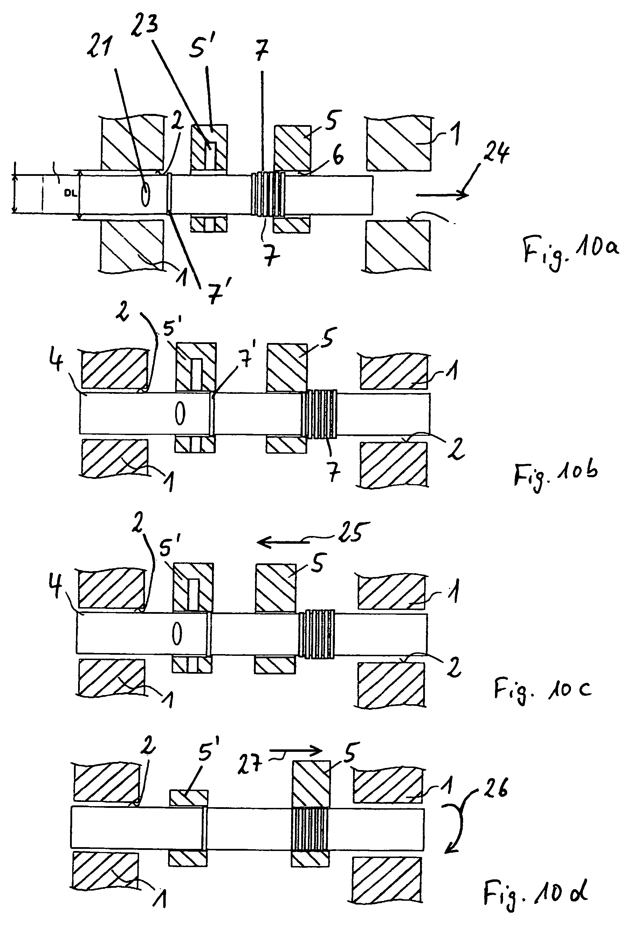

In den Fig. 10a - 10d ist das erfindungsgemäße Herstellungsverfahren am Beispiel des Zusammenbaus einer verstellbaren Nockenwelle dargestellt. Fig. 1a zeigt das Einfädeln der Tragwelle 4 in die miteinander fluchtenden Lageraufnahmen 2 und Durchgangsöffnungen 6. Die Tragwelle 4 ist abgekühlt worden, damit sich ihr Durchmesser verringert und die Tragwelle mitsamt den Durchmesseraufweitungen 7, 7' durch die Durchgangsöffnungen 6 hindurch geschoben werden kann. Der Pfeil 24 zeigt die Einfädelrichtung an.

In Fig 10b ist der Zustand nach der Herbeiführung des Temperaturausgleichs zwischen der Tragwelle 4 und den Bauteilen 5, 5' und den Lageraufnahmen 2 dargestellt. Die Tragwelle 4 hat ihre axiale Sollposition erreicht. Sie wurde erwärmt, so dass sich ihr Durchmesser wieder vergrößert hat. Das Bauteil 5 ist in Axialrichtung so positioniert, dass es auf einen kleinen Teilabschnitt der Durchmesseraufweitung 7 aufgeschrumpft worden ist. Dadurch ist eine lösbare Fixierung des Bauteils 5 auf der Tragwelle 4 herbeigeführt worden. Das Bauteil 5 kann ohne Weiteres wieder von dem Teilabschnitt der Durchmesseraufweitung 7 heruntergeschoben werden, um vor dem endgültigen Aufpressen des Bauteils 5 auf die Tragwelle 4 die gewünschte Winkellage zwischen Bauteil 5 und Tragwelle 4 einzustellen. In vergleichbarer Weise ist das Bauteil 5' in Axialrichtung so positioniert, dass es auf die Durchmesseraufweitung 7' aufgeschrumpft ist. Durch ist das Bauteil 5' lösbar fixiert auf der Tragwelle 4 gehalten. Das Bauteil 5' kann problemlos wieder von der Durchmesseraufweitung heruntergeschoben werden, um die gewünschte relative Winkellage zwischen Tragwelle 4, nicht dargestellter Innenwelle 20 und Bauteil 5' einzustellen. Die Bauteile 5 und 5' können auf diese Weise in einer gewünschten, vorbekannten relativen Winkellage auf der Tragwelle 4 lösbar fixiert gehalten werden. Dadurch wird die Automatisierung des anschließend erfolgenden Aufpressens der Bauteile 5 auf die Tragwelle 4 bzw. der anschließend erfolgenden Stiftverbindung zwischen dem Bauteil 5' und der nicht dargestellten Innenwelle 20 (vgl. Fig. 11) erleichtert und die Taktzeit beim Zusammenbau der Nockenwellen wird erhöht.

In Fig. 10c ist dargestellt, wie das Bauteil 5 unter Lösung der temporären Fixierung von der Durchmesseraufweitung 7 in Pfeilrichtung (Pfeil 25) heruntergeschoben worden ist. In gleicher Weise kann auch das Bauteil 5' von der Durchmesseraufweitung 7' heruntergeschoben werden.

Nachdem das Bauteil 5 von der Durchmesseraufweitung 7 heruntergeschoben wurde, wird die gewünschte relative Winkellage zwischen Bauteil 5 und Tragwelle 4 durch Verdrehung der Tragwelle 4 eingestellt. Dies ist in Fig. 10d angedeutet durch den gebogenen Pfeil 26 auf der rechten Seite. Anschließend wird das Bauteil 5 in Richtung des Pfeils 27 axial auf die Durchmesseraufweitung 7 aufgepresst, wodurch eine dauerhafte Pressverbindung in Form eines Längspressverbands zwischen dem Bauteil 5 und der Tragwelle 4 gebildet wird. Zusätzlich kann die Pressverbindung auch formschlüssig ausgebildet sein.

In analoger Weise kann nun auch das Bauteil 5' in seine Endposition für die drehfeste Verbindung mit der in den Fig. 10a - 10d nicht dargestellte Innenwelle 20 gebracht werden. Dazu wird das Bauteil 5' zunächst von der Durchmesseraufweitung 7' heruntergeschoben, so dass die Tragwelle 4 relativ zu dem Bauteil 5' frei verdrehbar ist. Anschließend werden die Tragwelle 4 und die nicht dargestellte Innenwelle 20 so verdreht, dass die Öffnung 21, die erste Bohrung 22 in der Innenwelle 20 (nicht dargestellt) und die zweite Bohrung 23 in dem Bauteil 5' miteinander fluchten. Danach wird ein Verbindungsstift 24 durch die Öffnung 21 in die erste Bohrung 22 und die zweite Bohrung 23 eingepresst, wodurch das Bauteil 5' verdrehfest mit der Innenwelle 20 verbunden wird. Das Bauteil 5' kann dann durch Verdrehung der Innenwelle 20 relativ zur Tragwelle 4 verdreht werden.

Der zusammengebaute Zustand der verstellbaren Nockenwelle ist in Fig. 11 dargestellt. Die Lageraufnahmen 2 bilden Gleitlager für die Tragwelle 4. An den Enden der Tragwelle 4 ragt die Innenwelle 20 aus der Tragwelle 4 heraus. Das Bauteil 5 ist mittels eine kraftschlüssigen oder kraft- und formschlüssigen Pressverbindung mit der Tragwelle 4 verbunden. Im Bereich des Bauteils 5' ist die Wellenanordnung im axialen Halbschnitt dargstellt. Die hohle Tragwelle 4 umgibt die Innenwelle 20. Ein Verbindungsstift 24 ist durch die Öffnung 21 (in Fig. 11 nicht sichtbar) in der Tragwelle 4 in die Bohrung 22 der Innenwelle 20 und die Bohrung 23 des Bauteils 5' eingepresst. Zwischen der Tragwelle 4 und der Innenwelle 20 ist ein Ringspalt vorhanden. Über den Verbindungsstift 24 ist das Bauteil 5' verdrehfest mit der Innenwelle 20 verbunden. Das Bauteil 5' kann relativ zu der Tragwelle 4 verdreht werden, indem die Innenwelle 20 relativ zur Tragwelle 4 verdreht wird. In Fig. 11 ist rechts neben dem Bauteil 5' die Durchmesseraufweitung 7' zu erkennen, auf der das Bauteil 5' vorher lösbar fixiert gehalten war.

## Patentansprüche

1. Verfahren zum Zusammenbau eines Moduls für einen Kraftfahrzeugmotor, welches mindestens eine Zylinderkopfhaube (1) mit Lageraufnahmen (2) und eine in den Lageraufnahmen (2) gelagerte Nockenwelle (3) umfasst, wobei die Nockenwelle (3) im Zuge des Zusammenbaus des Moduls aus einer Tragwelle (4) und mit der Tragwelle (4) zu verbindenden Bauteilen (5) gebaut wird, und wobei die Bauteile (5) Durchgangsöffnungen (6) zur Aufnahme der Tragwelle (4) aufweisen, **gekennzeichnet durch** folgende Verfahrensschritte:
a) es wird eine Tragwelle (4) zur Verfügung gestellt, welche in den Bereichen, in denen die Bauteile (4) befestigt werden sollen, lokale Durchmesseraufweitungen (7) und in den Bereichen, in denen die fertig gebaute Nockenwelle (3) in den Lageraufnahmen (2) gelagert sein soll, Lagerabschnitte (8) aufweist,
b) die auf der Tragwelle (4) zu befestigenden Bauteile (5) werden in einer vorbestimmten Reihenfolge so positioniert, dass ihre Durchgangsöffnungen (6) fluchtend zu den Lageraufnahmen (2) der Zylinderkopfhaube (1) angeordnet und an Axialpositionen positioniert sind, welche nicht den Axialpositionen entsprechen, die diese Bauteile (5) auf der fertig gebauten Nockenwelle (3) einnehmen;
c) die Tragwelle (4) wird gekühlt und/oder die Bauteile (5) werden ervvärmt, so dass die Tragwelle (4) mit ihren Durchmesseraufweitungen (7) und Lagerabschnitten (8) **durch** die Lageraufnahmen (2) der Zylinderkopfhaube (1) und die Durchgangsöffnungen (6) der Bauteile (5) hindurch geschoben werden kann;
d) die Tragwelle (4) wird **durch** die Lageraufnahmen (2) und die Durchgangsöffnungen (6) hindurch geschoben, so dass in jeder Lageraufnahme (2) ein Lagerabschnitt (8) der Tragwelle (4) und benachbart zu jedem Bauteil (5) eine Durchmesseraufweitung (7) angeordnet ist;
e) die Tragwelle (4) wird erwärmt und/oder die Bauteile (5) werden abgekühlt, so dass die Durchmesseraufweitungen (7) der Tragwelle (4) und die Durchgangsöffnungen (6) der den Durchmesseraufweitungen (6) zugeordneten Bauteile (5) eine vorbestimmte Überdeckung aufweisen;
f) die Bauteile (5) werden nacheinander auf die ihnen zugeordneten Durchmesseraufweitungen (7) aufgepresst oder die Durchmesseraufweitungen (7) werden nacheinander in die ihnen zugeordneten Durchgangsöffnungen (6) der Bauteile (5) eingepresst, wobei die jeweils die erforderliche Winkelposition jedes Bauteils (5) relativ zu der Tragewelle (4) vor dem Aufpressen oder Einpressen eingestellt wird.

2. Verfahren nach Anspruch 1, **dadurch gekennzeichnet, dass** im Verfahrensschritt f) die jeweils erforderliche Winkelposition jedes Bauteils (5) relativ zu der Tragewelle (4) vor dem Aufpressen oder Einpressen durch einfaches Verdrehen der Tragwelle (4) um einen bestimmten Winkel eingestellt wird.

3. Verfahren nach Anspruch 1 oder 2, **dadurch gekennzeichnet, dass** die Durchmesseraufweitungen (7) durch ein mechanisches Umformverfahren wie zum Beispiel Rollieren in die Tragwelle eingebracht werden.

4. Verfahren nach einem der voranstehenden Ansprüche, **dadurch gekennzeichnet, dass** die Lageraufnahmen (2) der Zylinderkopfhaube (1) und die Lagerabschnitte (8) der Tragwelle (4) so bemessen sind, dass die Lageraufnahmen (2) im fertig montierten Zustand der Zylinderkopfhaube (1) zusammen mit den Lagerabschnitten (8) Gleitlager bilden.

5. Verfahren nach einem der voranstehenden Ansprüche, **dadurch gekennzeichnet, dass** die Bauteile (5) im Verfahrensschritt b) so positioniert werden, dass sie nach dem im Verfahrensschritt e) stattfindenden Temperaturausgleich zwischen Tragwelle (4) und Bauteilen (5) auf einem Teilabschnitt der ihnen jeweils zugeordneten Durchmesseraufweitungen (7) lösbar fixiert gehalten sind.

6. Verfahren nach einem der voranstehenden Ansprüche, **dadurch gekennzeichnet, dass** die Tragwelle (4) als Hohlwelle ausgebildet ist, in deren Innerem eine Innenwelle (20) konzentrisch zur Hohlwelle angeordnet ist, wobei die Innenwelle (20) relativ zur Hohlwelle verdrehbar ist, und dass nach dem Temperaturausgleich gemäß Verfahrensschritt e) mindestens ein Bauteil (5') vorgesehen ist, welches nicht mit der Tragwelle (4) verbunden wird, sondern welches verdrehfest mit der Innenwelle (20) verbunden wird.

7. Verfahren nach Anspruch 6, **dadurch gekennzeichnet, dass** das Bauteil (5') mittels einer Stiftverbindung mit der Innenwelle (20) verbunden wird, wobei in der als Hohlwelle ausgebildeten Tragwelle (4) eine Öffnung (21), in der Innenwelle (20) eine erste Bohrung (22) und in dem Bauteil (5') eine zweite Bohrung (23) vorgesehen ist, dass die Öffnung (21), die erste Bohrung (22) und die zweite Bohrung (23) miteinander fluchtend positioniert werden, und dass ein Verbindungsstift (24) durch die Öffnung (21) in die erste Bohrung (22) und in die zweite Bohrung (23) eingepresst wird.

## Claims

1. Method for assembling a module for a motor vehicle engine, which module comprises at least one cylinder head cover (1) with bearing seats (2), and a camshaft (3) which is mounted in the bearing seats (2), the camshaft (3) being constructed during the assembly of the module from a support shaft (4) and components (5) to be connected to the support shaft (4), and the components (5) having through openings (6) for receiving the support shaft (4), **characterized by** the following method steps:
a) a support shaft (4) is provided which has local portions of widened diameter (7) in the regions in which the components (4) are to be fastened, and bearing sections (8) in the regions in which the completed camshaft (3) is to be mounted in the bearing seats (2),
b) the components (5) to be fastened on the support shaft (4) are positioned in a predefined sequence in such a way that their through openings (6) are arranged so as to be flush with the bearing seats (2) of the cylinder head cover (1) and are positioned at axial positions which do not correspond to the axial positions which the said components (5) assume on the completed camshaft (3);
c) the support shaft (4) is cooled and/or the components (5) are heated, with the result that the support shaft (4) can be pushed with its portions of widened diameter (7) and bearing sections (8) through the bearing seats (2) of the cylinder head cover (1) and the through openings (6) of the components (5);
d) the support shaft (4) is pushed through the bearing seats (2) and the through openings (6), with the result that a bearing section (8) of the support shaft (4) is arranged in each bearing seat (2) and a portion of widened diameter (7) is arranged adjacently with respect to each component (5);
e) the support shaft (4) is heated and/or the components (5) are cooled, with the result that the portions of widened diameter (7) of the support shaft (4) and the through openings (6) of the components (5) which are assigned to the portions of widened diameter (6) have a predefined overlap;
f) the components (5) are pressed one after another onto the portions of widened diameter (7) which are assigned to them or the portions of widened diameter (7) are pressed one after another into the through openings (6) of the components (5) which are assigned to them, in each case the required angular position of each component (5) relative to the support shaft (4) being set before the pressing-on or pressing-in operation.

2. Method according to Claim 1, **characterized in that**, in method step f), the respectively required angular position of each component (5) relative to the support shaft (4) is set by way of simple rotation of the support shaft (4) by a defined angle before the pressing-on or pressing-in operation.

3. Method according to Claim 1 or 2, **characterized in that** the portions of widened diameter (7) are made in the support shaft by way of a mechanical reshaping process, such as roll-forming.

4. Method according to one of the preceding claims, **characterized in that** the bearing seats (2) of the cylinder head cover (1) and the bearing sections (8) of the support shaft (4) are dimensioned in such a way that the bearing seats (2) form plain bearings together with the bearing sections (8) in the finally mounted state of the cylinder head cover (1).

5. Method according to one of the preceding claims, **characterized in that** the components (5) are positioned in method step b) in such a way that they are held in a releasably fixed manner on a part section of the portions of widened diameter (7) which are assigned to them in each case after the temperature equalization which takes place in method step e) between the support shaft (4) and the components (5).

6. Method according to one of the preceding claims, **characterized in that** the support shaft (4) is configured as a hollow shaft, in the interior of which an inner shaft (20) is arranged concentrically with respect to the hollow shaft, it being possible for the inner shaft (20) to be rotated relative to the hollow shaft, and **in that**, after the temperature equalization according to method step e), at least one component (5') is provided which is not connected to the support shaft (4), but rather which is connected fixedly to the inner shaft (20) so as to rotate with it.

7. Method according to Claim 6, **characterized in that** the component (5') is connected to the inner shaft (20) by means of a pin connection, an opening (21) being provided in the support shaft (4) which is configured as a hollow shaft, a first bore (22) being provided in the inner shaft (20), and a second bore (23) being provided in the component (5'), **in that** the opening (21), the first bore (22) and the second bore (23) are positioned so as to be flush with one another, and **in that** a connecting pin (24) is pressed through the opening (21) into the first bore (22) and into the second bore (23).

## Revendications

1. Procédé pour assembler un module pour un moteur de véhicule automobile, qui comprend au moins un capot de culasse (1) avec des logements de palier (2) et un arbre à cames (3) supporté dans les logements de palier (2), l'arbre à cames (3) au cours de l'assemblage du module étant construit à partir d'un arbre de support (4) et de composants (5) devant être raccordés à l'arbre de support (4), et les composants (5) présentant des ouvertures de passage (6) pour recevoir l'arbre de support (4), **caractérisé par** les étapes de procédé suivantes :
a) un arbre de support (4) est fourni, lequel présente, dans les régions dans lesquelles les composants (4) doivent être fixés, des élargissements de diamètre locaux (7) et dans les régions dans lesquelles l'arbre à cames construit fini (3) doit être supporté dans les logements de palier (2), des portions de palier (8),
b) les composants (5) devant être fixés sur l'arbre de support (4) sont positionnés dans une séquence prédéterminée de telle sorte que leurs ouvertures de passage (6) soient disposées en alignement avec les logements de palier (2) du capot de culasse (1) et soient positionnées au niveau de positions axiales qui ne correspondent pas aux positions axiales que ces composants (5) adoptent sur l'arbre à cames construit fini (3) ;
c) l'arbre de support (4) est refroidi et/ou les composants (5) sont chauffés, de telle sorte que l'arbre de support (4) puisse être enfoncé avec ses élargissements de diamètre (7) et ses portions de palier (8) à travers les logements de palier (2) du capot de culasse (1) et à travers les ouvertures de passage (6) des composants (5) ;
d) l'arbre de support (4) est enfoncé à travers les logements de palier (2) et les ouvertures de passage (6) de sorte que dans chaque logement de palier (2) soit disposée une portion de palier (8) de l'arbre de support (4) et, à côté de chaque composant (5), un élargissement de diamètre (7) ;
e) l'arbre de support (4) est chauffé et/ou les composants (5) sont refroidis de telle sorte que les élargissements de diamètre (7) de l'arbre de support (4) et les ouvertures de passage (6) des composants (5) associés aux élargissements de diamètre (6) présentent un recouvrement prédéterminé ;
f) les composants (5) sont pressés les uns après les autres sur les élargissements de diamètre (7) qui leur sont associés ou les élargissements de diamètre (7) sont enfoncés par pressage les uns après les autres dans les ouvertures de passage (6) des composants (5) qui leur sont associées, la position angulaire nécessaire de chaque composant (5) par rapport à l'arbre de support (4) étant à chaque fois ajustée avant le pressage ou l'enfoncement par pressage.

2. Procédé selon la revendication 1, **caractérisé en ce que** dans l'étape de procédé f), la position angulaire à chaque fois nécessaire de chaque composant (5) par rapport à l'arbre de support (4) est ajustée avant le pressage ou l'enfoncement par pressage par simple rotation de l'arbre de support (4) suivant un angle déterminé.

3. Procédé selon la revendication 1 ou 2, **caractérisé en ce que** les élargissements de diamètre (7) sont réalisés par un procédé de formage mécanique comme par exemple un écrouissage dans l'arbre de support.

4. Procédé selon l'une quelconque des revendications précédentes, **caractérisé en ce que** les logements de palier (2) du capot de culasse (1) et les portions de palier (8) de l'arbre de support (4) sont dimensionnés de telle sorte que les logements de palier (2) dans l'état monté fini du capot de culasse (1) forment des paliers lisses conjointement avec les portions de palier (8).

5. Procédé selon l'une quelconque des revendications précédentes, **caractérisé en ce que** les composants (5), dans l'étape de procédé b), sont positionnés de telle sorte qu'ils soient retenus de manière fixée de façon amovible après l'équilibrage de température ayant lieu dans l'étape de procédé e) entre l'arbre de support (4) et les composants (5) sur une portion partielle des élargissements de diamètre (7) qui leur sont à chaque fois associés.

6. Procédé selon l'une quelconque des revendications précédentes, **caractérisé en ce que** l'arbre de support (4) est réalisé sous forme d'arbre creux, à l'intérieur duquel est disposé un arbre intérieur (20) concentrique à l'arbre creux, l'arbre intérieur (20) pouvant tourner par rapport à l'arbre creux, et **en ce qu'**après l'équilibrage de température selon l'étape de procédé e), au moins un composant (5') est prévu, lequel n'est pas connecté à l'arbre de support (4) mais est connecté de manière solidaire en rotation à l'arbre intérieur (20).

7. Procédé selon la revendication 6, **caractérisé en ce que** le composant (5') est connecté au moyen d'une connexion à broche à l'arbre intérieur (20), dans l'arbre de support (4) réalisé sous forme d'arbre creux étant prévue une ouverture (21), dans l'arbre intérieur (20) étant prévu un premier alésage (22) et dans le composant (5') étant prévu un deuxième alésage (23), **en ce que** l'ouverture (21), le premier alésage (22) et le deuxième alésage (23) sont positionnés en alignement les uns avec les autres et **en ce qu'**une broche de connexion (24) est enfoncée à travers l'ouverture (21) dans le premier alésage (22) et dans le deuxième alésage (23).
